# EUROPÄISCHE PATENTSCHRIFT

(11) **EP 1 311 649 B1**
(45) Veröffentlichungstag und Bekanntmachung des Hinweises auf die Patenterteilung: **18.05.2016**
(21) Anmeldenummer: 01969543.6
(22) Anmeldetag: 27.07.2001
(51) Int. Cl.: C09J 153/00, C08F 293/00

(54) **HAFTKLEBEMASSEN AUF BASIS VON BLOCKCOPOLYMEREN DER STRUKTUR P(A)-P(B)-P(A)**
ADHESIVE MATERIAL BASED ON BLOCK COPOLYMERS HAVING A P(A)-P(B)-P(A) STRUCTURE
MATIERES ADHESIVES A BASE DE COPOLYMERES EN BLOCS DE STRUCTURE P(A)-P(B)-P(A)

(30) Priorität: 28.07.2000 DE 10036802
(43) Veröffentlichungstag der Anmeldung: 21.05.2003
(73) Patentinhaber: tesa SE, 22848 Norderstedt (DE)
(72) Erfinder: HUSEMANN, Marc, 22605 Hamburg (DE); ZÖLLNER, Stephan, 22043 Hamburg (DE)
(86) Internationale Anmeldenummer: PCT/EP2001/008739
(87) Internationale Veröffentlichungsnummer: WO 2002/010309

(56) Entgegenhaltungen:
- EP-A- 0 660 187
- EP-A- 0 921 170
- EP-A- 1 008 640
- GB-A- 2 267 284
- US-A- 5 403 658
- US-A- 5 763 548
- US-A- 5 807 937

## Beschreibung

Die Erfindung betrifft ein Verfahren zur Herstellung eines Haftklebebandes mit einer Haftklebemasse auf der Basis von Blockcopolymeren des allgemeinen Typs P(A)-P(B)-P(A).

Im Bereich der Haftklebemassen besteht aufgrund technologischer Weiterentwicklungen im Beschichtungsverfahren ein fortlaufender Bedarf für Neuentwicklungen. In der Industrie sind Heißschmelzverfahren (Hotmeltverfahren) mit lösungsmittelfreier Beschichtungstechnik zur Herstellung von Haftklebemassen von wachsender Bedeutung, da die Umweltauflagen immer größer werden und die Preise für Lösungsmittel weiter steigen. Daher sollten Lösungsmittel so weit wie möglich aus dem Fertigungsprozeß für Haftklebebänder eliminiert werden. Durch die damit verbundene Einführung der Hotmelt-Technologie werden immer höhere Anforderungen an die Klebemassen gestellt. Insbesondere Acrylathaftklebemassen werden sehr intensiv auf Verbesserungen hin untersucht. Für hochwertige industrielle Anwendungen werden Polyacrylate bevorzugt, da diese transparent und witterungsstabil sind. Neben diesen Vorteilen müssen diese Acrylathaftklebemassen aber auch hohen Anforderungen im Bereich der Scherfestigkeit und der Klebkraft gerecht werden. Dieses Anforderungsprofil wird durch Polyacrylate mit hohem Molekulargewicht, hoher Polarität und anschließend an die Herstellung mit hoher effizienter Vernetzung erreicht. Diese sehr scherfesten und polaren Haftklebemassen besitzen aber den Nachteil, daß sie für den Hotmelt-Extrusionsprozeß nicht gut geeignet sind, da hohe Anwendungstemperaturen erforderlich sind und da außerdem durch Scherung im Extruder das Molekulargewicht des Polymers abgebaut wird. Durch diese Schädigung wird das klebtechnische Niveau deutlich herabgesetzt. Die Klebkraft und die Anfaßklebrigkeit (Tack) sind in der Regel gering, da die Glasübergangstemperatur durch die polaren Anteile in den Klebemassen relativ hoch liegt. Besonders die Scherfestigkeiten der Hotmelt-beschichteten Acrylathaftklebemassen fallen - im Vergleich zur ursprünglichen mit Lösungsmittel beschichteten Haftklebemasse - deutlich ab. Daher werden zur Zeit unterschiedliche Konzepte zur Verringerung der Fließviskosität und damit der leichteren Extrusionsbeschichtung dieser Haftklebemassen untersucht.
Eine Möglichkeit dazu ist die sehr effiziente Vernetzung einer niedrigviskosen und unpolaren Acrylathaftklebemasse erst auf dem Träger, gegebenenfalls durch Einpolymerisation von UV-Photoinitiatoren in die Polyacrylatkette. So wurde z.B. Benzoinacrylat als Comonomer eingesetzt und die Vernetzung auf dem Träger mit UV-Licht durchgeführt [DE 27 43 979 A1]. In der US 5,073,611 wurden dagegen Benzophenon und Acetophenon als copolymerisierbare Monomere verwendet. Weiterhin werden Doppelbindungen enthaltende Polyacrylate sehr effizient strahlenchemisch vernetzt [US 5,741,543].
Styrol-Isopren-Styrol-Blockcopolymere (SIS) sind dagegen weit verbreitete Elastomere für Hotmelt-verarbeitbare Haftklebemassen [Herstellverfahren: US 3,468,972; US 3,595,941; Anwendung in Haftklebemassen: US 3,239,478; US 3,935,338]. Die gute Verarbeitbarkeit wird durch ein geringeres Molekulargewicht und durch eine spezielle Morphologie erreicht [EP 0 451 920 B1], die die Scherfestigkeit anhebt. Diese Haftklebemasen sind sehr gut mit UV-Licht bei Anwesenheit von (gegebenenfalls einpolymerisierten) Photoinitiatoren oder durch Elektronenstrahlen vernetzbar, da die Mittelblöcke eine Vielzahl von Doppelbindungen enthalten. Dennoch besitzen diese Elastomere Nachteile, wie z.B. die starke Alterung unter UV-Licht und in einer Sauerstoff/Ozon-haltigen Atmosphäre sowie eine relativ geringe Wärmescherfestigkeit, so daß diese Haftklebemassen für längerfristige Außenverklebungen und Anwendungen im höheren Temperaturbereich nicht geeignet sind.
Eine Verbesserung der Alterungsproblematik, der Hotmeltverarbeitbarkeit, der hohen Kohäsion und der effizienten strahlenschemischen Vernetzung liefert die Kombination aus SIS-Polymeren und Polyacrylaten.
Im der US 5,314,962 werden A-B-A-Blockcopolymere als Elastomere für Klebemassen beschrieben, die aber lediglich aufgrund einer A-Domänenbildung zu einer Kohäsionserhöhung der Haftklebemasse führen und somit - insbesondere bei hohen Temperaturen - nicht sehr scherfest sind.
In der EP 0 921 170 A1 werden A-B-A-Blockcopolymere beschrieben, die mit Harzzusätzen modifiziert wurden. Hier wurde nicht vernetzt, so daß auch in diesem Fall die Scherfestigkeit der beschriebenen Haftklebemassen nur sehr gering ist. EP 1 008 640 und US 5 763 548 offenbaren Haftklebemassen auf Basis von Blockcopolymeren, und ein Verfahren zur Herstellung davon.

Aufgabe der Erfindung ist es daher, verbesserte Haftklebemassen und Haftklebeband auf Polyäcrylatbasis zur Verfügung zu stellen, die die Nachteile des Standes der Technik nicht oder nur in verminderter Weise aufzeigen, wobei eine Erhöhung der Kohäsion erzielt werden kann, und die insbesondere für die Verarbeitung im Heißschmelzverfahren und für die Verwendung als Heißschmelzkleber geeignet sind, ohne daß dabei die für die Verwendung als Haftklebemasse günstigen Eigenschaften verloren gehen.

Die Aufgabe wird überraschend durch das Vefahren zur Herstellung von Haftklebebändern erfüllt, wie sie im Hauptanspruch beschrieben wird.

Dementsprechend betrifft der Anspruch 1 ein Verfahren zur Herstellung eines Haftklebebandes mit einer Haftklebemasse auf Basis von Blockcopolymeren des allgemeinen Typs P(A)-P(B)-P(A), wobei jedes Blockcopolymer aus einem mittleren (Co-)Polymerblock P(B) und zwei End(co)polymerblöcken P(A) besteht, dadurch gekennzeichnet, daß
- P(A) einen (Co-)Polymerblock aus einer Komponente A, welche aus zumindest einem Monomer A1 besteht, repräsentiert, wobei der (Co-)Polymerblock P(A) eine Glasübergangstemperatur von 0 °C oder tiefer besitzt,
- P(B) einen (Co-)Polymerblock aus zumindest einer Komponente B repräsentiert, welche aus zumindest einem Monomer B1 besteht, wobei der (Co-)Polymerblock P(B) eine Glasübergangstemperatur von 20 °C oder höher besitzt,
- der (Co-)Polymerblock P(B) in dem (Co-)Polymerblock P(A) unlöslich ist, die Blöcke P(B) und P(A) nicht mischbar sind.

In einer ersten vorteilhaften Ausführungsform der Haftklebemasse besteht die Komponente A aus mindestens zwei Monomeren A1 und A2. In einer weiteren hervorragenden Ausführungsform enthält die Komponente A2 zumindest eine funktionelle Gruppe, welche sich in einer radikalischen Polymerisationsreaktion inert verhält, und welche zur Erhöhung der Kohäsion des Blockcopolymers dient; insbesondere durch Bindungen zwischen den einzelnen Blockcopolymeren, wobei die funktionelle Gruppe der Komponente A2 eines Blockcopolymer-Makromoleküls mit zumindest einem weiteren Blockcopolymer-Makromolekül in Wechselwirkung tritt; insbesondere durch eine Vernetzungsreaktion.

Die Vernetzung wird dabei vorteilhaft durch energiereiche Strahlung, beispielsweise Elektronenstrahlung oder UV-Licht, ausgelöst. Weiterhin ist die Zufuhr von thermischer Energie geeignet, die Vernetzungsreaktion hervorzurufen, entsprechend der Wahl der jeweiligen funktionellen Gruppen. Die Auswahl der geeigneten Energiezufuhr für eine jeweilige Vernetzungsreaktion bei einer gegebenen funktionellen Gruppe gehört zum Stand der Technik und ist dem Fachmann bekannt.

Bindungen zwischen den einzelnen Blockcopolymeren im obigen Sinne sind alle Bindungen von rein physikalischen Attraktionskräften bis hin zu Bindungen aufgrund einer chemischen Reaktion (beispielsweise kovalente Bindungen, lonenbindungen, Van-der-Waals-Bindungen).

Hierzu gehören neben den oben beschriebenen Vernetzungsreaktionen beispielsweise auch Dipol-Dipol-Wechselwirkungen und/oder Wasserstoffbrückenbindungen.

Es sei hier erwähnt, daß im Sinne einer Bindungsbildung auch Verknüpfungen, Verschlingungen, Verhakungen oder dergleichen der Makromoleküle oder daran befindlicher Seitenketten dienen können.

In einer sehr günstigen Weiterentwicklung der erfinderischen Haftklebemassen besitzt der Block P(A) eine Glasübergangstemperatur zwischen -80 °C und 0 °C und/oder der Block P(B) eine Glasübergangstemperatur zwischen 25 °C und 180°C.

Als Monomere A1 können Acrylmonomere oder Vinylmonomere eingesetzt werden, die die Glasübergangstemperatur - auch in Kombination mit Monomer A2 - auf unterhalb von 0 °C herabsetzen.

Es hat sich im erfinderischen Sinne als sehr vorteilhaft erwiesen, als Monomer A1 zumindest eine Verbindung der folgenden allgemeinen Formel 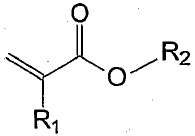 einzusetzen, wobei R₁ = H oder CH₃ und R₂ aus der Gruppe der verzweigten oder unverzweigten, gesättigten Alkylgruppen mit 4 bis 14 Kohlenstoffatomen, sehr bevorzugt mit 4 bis 9 Kohlenstoffatomen, gewählt ist.
Spezifische Beispiele für derartige (modifizierte) Acryl- und Methacrylsäureester sind n-Butylacrylat, n-Pentylacrylat, n-Hexylacrylat, n-Heptylacrylat, n-Octylacrylat, n-Nonyl-acrylat und deren verzweigten Isomere, beispielsweise 2-Ethylhexylacrylat.

Weiterhin ist es im erfinderischen Sinne günstig, optional als Monomere A1 Vinylmonomere aus den folgenden Gruppen einzusetzen:
Vinylester, Vinylether, Vinylhalogenide, Vinylidenhalogenide, Vinylverbindungen mit aromatischen bzw. aliphatischen Cyclen in Heterostellung.
Nicht ausschließliche Beispiele für diese Verbindungen sind Vinylacetat, Vinylformamid.

Als Monomer A2 werden vorteilhaft Acrylmonomer oder Vinylmonomere verwendet, die die Glasübergangstemperatur des Blockcopolymers - auch in Kombination mit Monomer A1 - auf unterhalb 0 °C herabsetzen und zumindest eine funktionelle Gruppe zur Vernetzung tragen. In einer vorteilhaften Variante des erfindungsgemäßen Verfahrens werden als Monomer A2 eine oder mehrere Verbindungen der folgenden allgemeinen Formel 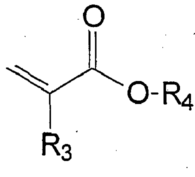 eingesetzt, wobei R₃ = H oder CH₃ ist und der Rest -OR₄ die funktionelle Gruppe zur Erhöhung der Kohäsion der Haftklebemasse darstellt oder beinhaltet.

Für die funktionelle Gruppe wird in vorteilhafter Weise eine Hydroxy-, eine Carboxy-, eine Epoxy-, eine Säureamid-, eine Isocyanato- oder eine Aminogruppe, eine einen UV-Photoinitiator zur UV-Vernetzung beinhaltende Gruppe oder eine ungesättigte Gruppe gewählt.

Besonders bevorzugte Beispiele für die Komponente A2 sind Hydroxyethylacrylat, Hydroxypropylacrylat, Hydroxyethylmethacrylat, Hydroxypropylmethacrylat, Acrylsäure, Methacrylsäure, Allylalkohol, Maleinsäureanhydrid, Itaconsäureanhydrid, Itaconsäure, Benzoinacrylat, acryliertes Benzophenon, Acrylamid, Dimethylacrylamid und Glyceridyl-methacrylat, wobei diese Aufzählung nicht abschließend ist.
Neben Acrylmonomeren lassen sich auch Vinylverbindungen mit nicht während der Polymerisation reagierenden Doppelbindungen einsetzen. Besonders bevorzugte Beispiele hierfür sind Isopren und Butadien. Für mit Doppelbindungen modifizierte Acrylate eignen sich besonders vorteilhaft Allylacrylat und acrylierte Zimtsäureester. Weitere sehr vorteilhafte Methoden zur Einführung ungesättigter Verbindungen sind in der US 5,741,543 beschrieben.

Als Monomer B1 sollte zumindest ein Monomer eingesetzt werden, so daß die entstehenden (Co-)Polymer-Blöcke P(B) in der Lage sind, eine 2-Phasen-Domänenstruktur mit den (Co-)Polymer-Blöcken P(A) auszubilden. Beispiele hierfür sind Vinylaromaten, Methylmethacrylate, Cyclohexylmethacrylate, (sobornylmethacrylate; insbesondere Methylmethacrylat und Styrol.

In einer bevorzugten Ausführungsform der erfinderischen Blockcopolymere besitzt die Haftklebemase ein mittleres Molekulargewicht zwischen 25.000 und 750.000 g/mol, insbesondere zwischen 100.000 und 500.000 g/mol.
Weiterhin ist es von Vorteil, wenn der Anteil- der Polymerblöcke P(B) zwischen 10 und 60 Gewichtsprozent des gesamten Blockcopolymers, mehr bevorzugt zwischen 15 und 40 Gewichtsprozent liegt.
Der Gewichtsanteil der Komponente A2 liegt im Verhältnis zur Komponente A1 bevorzugt zwischen 0,1 und 20, insbesondere zwischen 0,5 und 5.

Die Blockcopolymere werden durch Kontrollierte Polymerisation über den RAFT-Prozess (Rapid Addition-Fragmentation Chain Transfer) hergestellt. Zur Herstellung kann z.B. ein difunktioneller Initiator verwendet werden, der in einem Schritt die Polymerisation der Komponente B initiiert und dann in einem zweiten Schritt die Komponenten A (bzw. A1 und A2) als Endblöcke polymerisiert (II), wobei die Zwischenstufe optional isoliert werden kann. I-R-I stellt in der folgenden Reaktionsgleichung den difunktionellen Initiator mit den funktionellen Gruppen I dar.

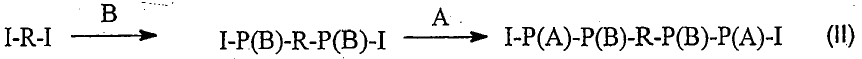

Weiterhin kann das Dreiblockcopolymer durch Radikalrekombination der Makromonomere P(A)-P(B)* hergestellt werden (III).

2P(A)-P(B)*→ P(A)-P(B)-P(B)-P(A) (III)

Bevorzugt können zur Polymerisation der Blockcopolymere Nitroxid-Regler zur Radikalkontrolle eingesetzt werden. Die Polymerisation kann in Gegenwart eines oder mehrerer organischer Lösungsmittel und/oder in Gegenwart von Wasser oder in Substanz durchgeführt werden. Vorzugsweise wird so wenig Lösungsmittel wie möglich eingesetzt. Die Polymerisationszeit beträgt - je nach Umsatz und Temperatur- zwischen 6 und 48 h. Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wässrigen Medien bzw. Gemischen aus organischen und wässrigen Lösungsmitteln werden zur Polymerisation bevorzugt dem Fachmann bekannte Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden. Zur Radikalstabilisierung werden Nitroxide des Typs (IVa) oder (IVb) eingesetzt: 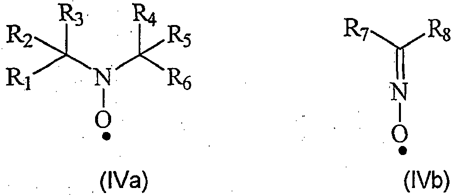 wobei,
R₁, R₂, R₃, R₄, R₅, R₆, R₇, R₈ identische oder unterschiedliche Verbindungen oder Atome repräsentieren:
   - ein oder mehrere Halogenide, wie z.B. Chlor, Brom oder lod
   - die Gruppe der linearen, verzweigten cyclischen, gesättigten oder ungesättigten Kohlenwasserstoffe repräsentieren
   - aus der Gruppe der Ester -COOR₉ oder Alkoxide -OR₁₀ oder Phosphonate -PO(OR₁₁)₂ , wobei R₉, R₁₀ oder R₁₁ repräsentativ für Gruppen der linearen, verzweigten cyclischen, gesättigten oder ungesättigten Kohlenwasserstoffe stehen.

Die Verbindungen (IVa) oder (IVb) können auch an Polymerketten jeglicher Art gebunden sein und somit zum Aufbau der Blockcopolymere als Makroradikale oder Mäkroregler genutzt werden.
Mehr bevorzugt werden kontrollierte Regler für die Polymerisation Verbindungen des Typs:
- 2,2,5,5-Tetramethyl-1-pyrrolidinyloxyl (allgemein bekannt und käuflich erhältlich als PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-ROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (allgemein bekannt und käuflich erhältlich als TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidi-nyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- T-Butyl-t-amyl Nitroxid

Der RAFT Prozeß ist in den Patenten WO 98/01478 und WO 99/31144 ausführlich beschrieben. Zur Herstellung von Blockcopolymeren eignen sich besonders vorteilhaft Trithiocarbonate [Macromolecules 2000, 33, 243-245], die in einem ersten Schritt Monomere des mittleren Blocks statistisch copolymerisieren, daraufhin isoliert werden können oder direkt zur anschließenden Einpolymerisation von Monomeren der Endblöcke genutzt werden.

Zur Herstellung einer Haftklebemasse werden die bisher beschriebenen Blockcopolymere in Lösung oder aus der Schmelze weiterverarbeitet. Als Lösungsmittel eignen sich ein oder mehrere organische Lösungsmittel. Zur Herstellung eines Haftklebebandes muss das Blockcopolymer mit Harzen modifiziert werden. Als Harze sind beispielsweise Terpen-, Terpenphenolharze, C₅- und C₉-Kohlenwasserstoffharze, Pinen-, Inden- und Kolophoniumharze allein und auch in Kombination miteinander einsetzbar. Prinzipiell lassen sich aber alle in dem entsprechenden Polyacrylat löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.
Der Gewichtsanteil der Harze am Blockcopolymer kann zwischen 0 und 50 %, mehr bevorzugt zwischen 20 und 40 % betragen.
Weiterhin können Weichmacher, verschiedene Füllstoffe (beispielsweise Ruß, TiO₂, Voll- oder Hohlkugeln aus Glas oder anderen Materialien, Keimbildner), Blähmittel, Compoundierungsmittel und/oder Alterungsschutzmittel zugesetzt werden.

In einer vorteilhaften Weiterentwicklung werden in P(A) lösliche/verträgliche Vernetzersubstanzen hinzugegeben. Als Vernetzer eignen sich z.B. multifunktionelle Acrylate, multifunktionelle Hydroxide, multifunktionelle Expoxide, multifunktionelle Amine oder multifunktionelle Isocyanate. Diese Aufzählung besitzt nicht den Anspruch auf Vollständigkeit.

In einer vorteilhaften Weiterentwicklung werden den Blockcopolymeren, insbesondere denjenigen mit zur Vernetzung befähigten Gruppen und hierbei insbesondere solchen mit durch Initiierung durch UV-Licht zur Vernetzung befähigten Gruppen, UV-Photoinitiatoren zugesetzt. Geeignete und vorteilhafte Photoinitiatoren sind beispielsweise Benzoinether, wie z.B. Benzoinmethylether und Benzoinisopropylether, substituierte Acetophenone, wie z.B. 2,2-Diethoxyacetophenon (erhältlich als Irgacure 651 von Fa. Ciba Geigy), 2,2-Dimethoxy-2-phenyl-1-phenylethanon, Dimethoxyhydroxyacetophenon, substituierte alpha-Ketole, wie z.B. 2-Methoxy-2-hydroxy propiophenon, aromatische Sulfonylchloride, wie z.B. 2-Naphthyl sulfonylchlorid, und photoaktive Oxime, wie z.B. 1-Phenyl-1,2-propandion-2-(o-ethoxycarbonyl)oxim.

Das erfindungsgemäße Verfahren für die Herstellung von Klebebändern zeichnet sich dadurch aus, dass die Haftklebemasse aus der Schmelze heraus weiterverarbeitet wird, daß sie insbesondere auf einen Träger aufgetragen wird.

Als Trägermaterial, beispielsweise für Klebebänder, lassen sich hierbei die dem Fachmann geläufigen und üblichen Materialien, wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung soll nicht abschließend sein.

Die Vernetzung der erfindungsgemäßen Schmelzhaftklebemassen erfolgt durch kurzzeitige UV-Bestrahlung im Bereich von 200 - 400 nm mit handelsüblichen Quecksilber-Hochdruck oder Mitteldrucklampen mit einer Leistung von z.B. 80 bis 200 W/cm oder ionisierende Strahlung, wie z.B. Elektronenstrahlen. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler. Eine Vernetzung kann auch durch thermische Energie, insbesondere bei einer Temperatur von 70 - 140 °C, ausgelöst oder gefördert werden.

Für die Prüfung werden je nach Probe PET-Folien bzw. silikonisierte Trennpapiere mit einem Masseauftrag von 50 g/m² beschichtet.

Weiterhin ist Inhalt der Erfindung die Verwendung der so erhaltenen Haftklebemasse für ein Klebeband, wobei die Acrylathaftklebemasse als ein- oder doppelseitiger Film auf einem Träger vorliegt.

Die Erfindung soll im folgenden durch einige Beispiele näher erläutert werden.
In Abhängigkeit von den gewünschten klebtechnischen Eigenschaften der Acrylathotmelts wird eine Auswahl an Acryl- und Vinylmonomeren getroffen. Mengenangaben, Anteile und Prozentanteile sind auf die Gesamtmenge der Monomeren bezogen.

### Beispiele

### Testmethoden

Folgende Testmethoden wurden angewendet, um die klebtechnischen Eigenschaften der hergestellten Haftklebemassen zu evaluieren.

### Scherfestigkeit (Test A1, A2).

Ein 13 mm breiter Streifen des Klebebandes wurde auf eine glatte und gereinigte Stahloberfläche aufgebracht. Die Auftragsfläche betrug 20 mm x 13 mm (Länge x Breite). Anschließend wurde wie folgt vorgegangen:
Test A1: Bei Raumtemperatur wurde ein 1 kg-Gewicht an dem Klebeband befestigt und die Zeit bis zum Abfallen des Gewichtes gemessen.
Test A2: Bei 70 °C wurde ein 1 kg-Gewicht an dem Klebeband befestigt und die Zeit bis zum Abfallen des Gewichtes gemessen.
Die gemessenen Scherstandzeiten sind jeweils in Minuten angegeben und entsprechen dem Mittelwert aus drei Messungen.

### 180° Klebkrafttest (Test B)

Ein 20 mm breiter Streifen einer auf Polyester als Schicht aufgetragenen Acrylathaftklebemasse wurde auf Stahlplatten aufgebracht. Der Haftklebestreifen wurde zweimal mit einem 2 kg Gewicht auf das Substrat aufgedrückt. Das Klebeband wurde anschließend sofort mit 300 mm/min und im 180° Winkel vom Substrat abgezogen. Die Stahlplatten wurden zweimal mit Aceton und einmal mit Isopropanol gewaschen. Alle Messungen wurden bei Raumtemperatur unter klimatisierten Bedingungen durchgeführt. Die Meßergebnisse sind in N/cm angegeben und sind gemittelt aus drei Messungen.

### Bestimmung des Gelanteils (Test C)

Die sorgfältig getrockneten lösuhgsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert als prozentuale Angabe des Gewichtsanteil des Polymers, der nicht in Toluol löslich ist, bestimmt.

### Herstellung der Proben

Die verwendeten Acrylate, Methacrylate und Styrol sind kommerziell erhältlich und wurden vor dem Einsatz destillativ gereinigt. Als Regler wurde folgendes Trithiocarbonat (V) gemäß Macromolecules 2000, 33, 243-245 und Synth. Commun. 1988, 18, 1531-1536 hergestellt.

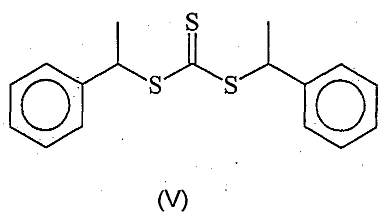

### Durchführung der Polymerisationen

Die Durchführung der Polymerisation erfolgte im allgemeinen in zwei Stufen. Im ersten Schritt wurden die Polyacrylatblöcke hergestellt, im zweiten Schritt die Polystyrol- bzw. Polymethylmethacrylatblöcke.

### Beispiel 1:

In einem 2000 ml Schlenkgefäß wurden 800 g n-Butylacrylat, 400 ml Toluol, 0,156 g des Trithiocarbonates (V) und 0,12 g Azoisobutyronitril (AIBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 250 ml Toluol sowie 160 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert (Mₙ = 412000 g/mol, M_{w/n} = 1.67). 100 g des Blockcopolymers wurden in 200 g Toluol gelöst.und dann 30 Gewichtsanteile Foral 85™ (Fa. Hercules) und 5 Gewichtsanteile Catenex 945™ (Fa. Shell) hinzugegeben. Die compoundierte Masse wurde aus Lösung mit 50 g/m² auf ein silikonisiertes Trennpapier ausgestrichen und anschließend bei 120°C für 15 Minuten getrocknet. Zur Analyse der klebtechnischen Eigenschaften wurden die Testmethoden A1, A2, B und C durchgeführt.

### Beispiel 2:

In einem 2000 ml Schlenkgefäß wurden 800 g 2-Ethylhexylacrylat, 400 ml Toluol, 0,156 g des Trithiocarbonates (V) und 0,12 g Azoisobutyronitril (AIBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 250 ml Toluol sowie 160 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf-78 °C abgekühlt) unter starkem Rühren gefällt. Der Niederschlag wurde über eine gekühlte Fritte abfiltriert und dann via GPC analysiert (Mₙ = 401000 g/mol, M_{w/n} = 1.70).
100 g des Blockcopolymers wurden in 200 g Toluol gelöst und dann 20 Gewichtsanteile Foral 85™ (Fa Hercules) und 3 Gewichtsanteile Catenex 945™ (Fa. Shell) hinzugegeben. Die compoundierte Masse wurde vom Lösemittel befreit und dann aus der Schmelze durch eine Schlitzdüse mit 50 g/m² auf ein silikonisiertes Trennpapier beschichtet und anschließend mit 60 kGy Elektronenstrahl-Dosis (ES-Dosis) bei einer Beschleunigungsspannung von 230 kV bestrahlt. Zur Analyse der klebtechnischen Eigenschaften wurden die Testmethoden A1, A2, B und C durchgeführt.

### Beispiel 3:

In einem 2000 ml Schlenkgefäß wurden 650 g 2-Ethylhexylacrylat, 150 g N-tert-Butylacrylamid, 400 ml Toluol, 0,156 g des Trithiocarbonates (V) und 0,12 g Azoisobutyronitril (AlBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 250 ml Toluol sowie 160 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert (Mₙ = 384000 g/mol, M_{w/n} = 1.73).
100 g des Blockcopolymers wurden in 200 g Toluol gelöst und dann 20 Gewichtsanteile Foral 85™ (Fa. Hercules) und 3 Gewichtsanteile Catenex 945™ (Fa. Shell) hinzugegeben. Die compoundierte Masse wurde vom Lösemittel befreit und dann aus der Schmelze durch eine Schlitzdüse mit 50 g/m² auf ein silikonisiertes Trennpapier beschichtet und anschließend mit 60 kGy ES-Dosis bei einer Beschleunigungsspannung von 230 kV bestrahlt. Zur Analyse der klebtechnischen Eigenschaften wurden die Testmethoden A1, A2, B und C durchgeführt.

### Beispiel 4:

In einem 2000 ml Schlenkgefäß wurden 400 g 2-Ethylhexylacrylat, 400 g n-Butylacrylat, 400 ml Toluol, 0,156 g des Trithiocarbonates (V) und 0,12 g Azoisobutyronitril (AlBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurde auf Raumtemperatur abgekühlt und das Polymer in 6,0 L Methanol (auf -78 °C abgekühlt) unter starkem Rühren gefällt. Nach Abtrennung durch eine gekühlte Fritte und Trockung im Vakuum wurden 400 g des Polymers wiederum in ein 2000 ml Schlenkgefäß gegeben, 500 ml Toluol, 0,25 g 1,1'-azobis(1-cyclohexancarbonitril) (Vazo 88™, Fa. DuPont), 150 g Methylmethacrylat hinzugegeben, das Gefäß drei mal entgast und dann unter Argon die Polymerisation bei 80 °C mit einer Reaktionsdauer von 8 h unter Rühren durchgeführt. Zur Isolierung wurde auf RT abgekühlt, das Polymer in 700 ml Dichlormethan gelöst und dann in 8,0 L Methanol (auf -78 °C gekühlt) unter starkem Rühren gefällt. Der Niederschlag wurde über eine gekühlte Fritte abfiltriert und dann via GPC analysiert (Mₙ = 445000 g/mol, M_{w/n} = 1.61).
100 g des Blockcopolymers wurden in 200 g Toluol gelöst und dann 20 Gewichtsanteile Foral 85™ (Fa. Hercules) und 3 Gewichtsanteile Catenex 945™ (Fa. Shell) hinzugegeben. Die compoundierte Masse wurde vom Lösemittel befreit und dann aus der Schmelze durch eine Schlitzdüse mit 50 g/m² auf ein silikonisiertes Trennpapier beschichtet und anschließend mit 60 kGy ES-Dosis bei einer Beschleunigungsspannung von 230 kV bestrahlt. Zur Analyse der klebtechnischen Eigenschaften wurden die Testmethoden A1, A2, B und C durchgeführt.

### Beispiel 5:

In einem 2000 ml Schlenkgefäß wurden 760 g n-Butylacrylat, 40 g Acrylsäure, 400 ml Toluol, 0,156 g des Trithiocarbonates (V) und 0,12 g Azoisobutyronitril (AIBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 250 ml Toluol sowie 160 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf -78°C abgekühlt) unter starkem Rühren gefällt. Der Niederschlag wurde über eine gekühlte Fritte abfiltriert und dann via GPC analysiert (Mₙ = 430000 g/mol, M_{w/n} = 1.76).
100 g des Blockcopolymers wurden in 200 g Toluol gelöst und dann 20 Gewichtsanteile Foral 85™ (Fa. Hercules), 3 Gewichtsanteile Catenex 945™ (Fa. Shell) und 0,6 Gewichtsanteile Aluminiumacetylacetonat hinzugegeben. Die compoundierte Masse wurde aus Lösung mit 50 g/m² auf ein silikonisiertes Trennpapier ausgestrichen und anschließend bei 120 °C für 20 Minuten getrocknet. Zur Analyse der klebtechnischen Eigenschaften wurden die Testmethoden A1, A2, und B durchgeführt.

### Beispiel 6:

In einem 2000 ml Schlenkgefäß wurden 780 g 2-Ethylhexylacrylat, 20 g Hydroxyethylacrylat, 400 ml Toluol, 0,156 g des Trithiocarbonates (V) und 0,12 g Azoisobutyronitril (AIBN) eingefüllt, das Gefäß drei mal entgast und dann unter Argon die Polymerisation durchgeführt. Zur Initiierung wurde auf 60 °C hochgeheizt und unter Rühren 8h polymerisiert. Dann wurden im Vakuum Lösemittel und die verbliebenen Monomere destillativ abgetrennt und 250 ml Toluol sowie 160 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert (Mₙ = 405000 g/mol, M_{w/n} = 1.71).
100 g des Blockcopolymers wurden in 200 g Toluol gelöst und dann 20 Gewichtsanteile Foral 85™ (Fa. Hercules), 3 Gewichtsanteile Catenex 945™ (Fa. Shell) und 0.6 Gewichtsanteile Desmodur N75™ (Fa. Bayer) hinzugegeben. Die compoundierte Masse wurde aus Lösung mit 50 g/m² auf ein silikonisiertes Trennpapier ausgestrichen und anschließend bei 120 °C für 20 Minuten getrocknet. Zur Analyse der klebtechnischen Eigenschaften wurden die Testmethoden A1, A2, und B durchgeführt.

### Beispiel 7:

In einem 2000 ml Schlenkgefäß wurden 796 g 2-Ethylhexylacrylat, 4 g acryliertes Benzophenon Ebecryl 36™ (Fa. UCB), 400 ml Toluol, 0,156 g des Trithiocarbonates (V) und 0,12 g Azoisobutyronitril (AIBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 250 ml Toluol sowie 160 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert (Mₙ = 422000 g/mol, M_{w/n} = 1.65).
100 g des Blockcopolymers wurden in 200 g Toluol gelöst und dann 20 Gewichtsanteile RX-207™ (Fa. Cray Valley) und 3 Gewichtsanteile Catenex 945™ (Fa. Shell) hinzugegeben. Die compoundierte Masse wurde aus Lösung mit 50 g/m² auf ein silikonisiertes Trennpapier ausgestrichen und anschließend bei 120 °C für 15 Minuten getrocknet. Zur Härtung wurden diese Proben mit 20 m/min mit einem Quecksilber-Mitteldruckstrahler (120 W/cm) mit 4 Durchgängen durch die Lampe bestrahlt. Als Referenz wurde ebenfalls das unbestrahlte Haftklebeband ausgeprüft (Beispiel 7'). Zur Analyse der klebtechnischen Eigenschaften wurden die Testmethoden A1, A2, B und C durchgeführt.

### Beispiel 8:

In einem 2000 ml Schlenkgefäß wurden 770 g 2-Ethylhexylacrylat, 20 g N-tert.-Butyl-acrylamid, 4 g Benzoinacrylat , 400 ml Toluol, 0,156 g des Trithiocarbonates (V) und 0,12 g Azoisobutyronitril (AIBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel) und die verbliebenen Monomere destillativ abgetrennt und 250 ml Toluol sowie 160 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert (Mₙ = 397000 g/mol, M_{w/n} = 1.73).
100 g des Blockcopolymers wurden in 200 g Toluol gelöst und dann 20 Gewichtsanteile RX-207™ (Fa. Cray Valley) und 3 Gewichtsanteile Catenex 945™ (Fa. Shell) hinzugegeben. Die compoundierte Masse wurde aus Lösung mit 50 g/m² auf ein silikonisiertes Trennpapier ausgestrichen und anschließend bei 120 °C für 15 Minuten getrocknet. Zur Härtung wurden diese Proben mit 20 m/min mit einem Quecksilber-Mitteldruckstrahler (120 W/cm) mit 4 Durchgängen durch die Lampe bestrahlt. Als Referenz wurde ebenfalls das unbestrahlte Haftklebeband ausgeprüft (Beispiel 8'). Zur Analyse der klebtechnischen Eigenschaften wurden die Testmethoden A1, A2, B und C durchgeführt.

### Beispiel 9:

In einem 2000 ml Schlenkgefäß wurden 750 g 2-Ethylhexylacrylat, 40 g Methylacrylat, 10 g acrylierter Zimtsäureester, 400 ml Toluol, 0,156 g des Trithiocarbonates (V) und 0,12 g Azoisobutyronitril (AIBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 250 ml Toluol sowie 160 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert (Mₙ = 402000 g/mol, M_{w/n} = 1.78).
100 g des Blockcopolymers wurden in 200 g Toluol gelöst und dann 20 Gewichtsanteile RX-207™ (Fa. Cray Valley) und 3 Gewichtsanteile Catenex 945™ (Fa. Shell) hinzugegeben. Die compoundierte Masse wurde aufkonzentriert und dann aus der Schmelze durch eine Schlitzdüse auf ein silikonisiertes Trennpapier beschichtet. Zur Härtung wurde die Klebebandprobe mit 20 kGy ES-Dosis bei 230 kV Beschleunigungsspannung bestrahlt. Zur Analyse der klebtechnischen Eigenschaften wurden die Testmethoden A1, A2, B und C durchgeführt.

### Beispiel 10:

In einem 2000 ml Schlenkgefäß wurden 750 g 2-Ethylhexylacrylat, 40 g Methylacrylat, 10 g acrylierter Zimtsäureester, 400 ml Toluol, 0,156 g des Trithiocarbonates (V) und 0,12 g Azoisobutyronitril (AlBN) eingefüllt, das Gefäß drei mal entgast und dann unter Argon die Polymerisation durchgeführt. Zur Initiierung wurde auf 60 °C hochgeheizt und unter Rühren 8 h polymerisiert. Dann wurden im Vakuum Lösemittel und die verbliebenen Monomere destillativ abgetrennt und 250 ml Toluol sowie 240 g Styrol hinzugegeben. Nach weiteren 24 h Reaktionszeit bei 90 °C wurde zur Isolierung auf RT abgekühlt, das Polymer in 800 ml Dichlormethan gelöst und dann in 8,0 L Methanol (auf -78 °C abgekühlt) unter starkem Rühren gefällt. Der Niederschlag wurde über eine gekühlte Fritte abfiltriert und dann via GPC analysiert (Mₙ = 455000 g/mol, M_{w/n} = 1.89).
100 g des Blockcopolymers wurden in 200 g Toluol gelöst und dann 20 Gewichtsanteile RX-207™ (Fa. Cray Valley) und 3 Gewichtsanteile Catenex 945™ (Fa. Shell) hinzugegeben. Die compoundierte Masse wurde aufkonzentriert und dann aus der Schmelze durch eine Schlitzdüse auf ein silikonisiertes Trennpapier beschichtet. Zur Härtung wurde die Klebebandprobe mit 20 kGy ES-Dosis bei 230 kV Beschleunigungsspannung bestrahlt. Zur Analyse der klebtechnischen Eigenschaften wurden die Testmethoden A1, A2, B und C durchgeführt.

### Resultate

In der folgenden Tabelle sind die klebtechnischen Eigenschaften der Beispiele 1 bis 4 aufgelistet.

| Tabelle 1 | | | | |
|---|---|---|---|---|
| Beispiel | SSZ RT Test A1 | SSZ 70 °C Test A2 | KK-Stahl [N/cm] Test B | Gelwert [%] Test C |
| 1 | 390 | 2 | 13.5 | 0 |
| 2 | +10000 | 1020 | 5.1 | 34 |
| 3 | +10000 | 4635 | 4.6 | 40 |
| 4 | +10000 | 2270 | 5.0 | 32 |

| | | | | |
|---|---|---|---|---|
| Masseauftrag: 50g/m². SSZ: Scherstandzeiten [min] RT: Raumtemperatur KK: Klebkraft auf Stahl | | | | |

Beispiel 1 zeigt, daß sich mit der Anwendung des erfindungsgemäßen Blockcopolymers sehr klebstarke Haftklebemassen herstellen lassen. Durch die Elektronenstrahl-Vernetzung läßt sich die Scherfestigkeit - insbesondere in der Wärme - deutlich erhöhen. Beispiel 3 belegt, daß die Wärmescherfestigkeit durch die Anhebung der Glasübergangstemperatur durch N-tert.-Butylacrylamid in den Endblöcken weiter gesteigert werden kann. Auch mit einem PMMA-Mittelblock wird eine gute Kohäsion erreicht (Beispiel 4).

In Tabelle 2 sind die Ergebnisse der klebtechnischen Auswertungen der Beispiele 5 bis 10 dargestellt.

| Tabelle 2 | | | | |
|---|---|---|---|---|
| Beispiel | SSZ RT Test A1 | SSZ 70 °C Test A2 | KK-Stahl [N/cm] Test B | Gelwert [%] Test C |
| 5 | +10000 | 2350 | 5.8 | -- |
| 6 | +10000 | 1755 | 5.7 | -- |
| 7 | +10000 | 1090 | 6.4 | 49 |
| 7' | 765 | 15 | 12.7 | 0 |
| 8 | +10000 | 4550 | 6.0 | 54 |
| 8' | 465 | 5 | 12.2 | 0 |
| 9 | +10000 | 1105 | 5.7 | 52 |
| 10 | +10000 | 3005 | 5.4 | 55 |

| | | | | |
|---|---|---|---|---|
| Masseauftrag: 50g/m². SSZ: Scherstandzeiten [min] RT: Raumtemperatur KK: Klebkraft auf Stahl | | | | |

Die Beispiele 5 und 6 belegen, daß sowohl Acrylsäure als auch Hydroxyethylacrylat geeignet sind, funktionelle Gruppen in das Blockcopolymer einzufügen, die zur thermischen Vernetzung mit Metallchelaten bzw. multifunktionellen Isocyanaten genutzt werden können und somit hochscherfeste Haftklebemassen ermöglichen. Beispiele 7 und 8 zeigen, daß weiterhin Photoinitiatoren copolymerisierbar sind und nach der UV-Bestrahlung zur Gelbildung führen. Der Vergleich mit den unbestrahlten Mustern (Beispiele 7' und 8') liefert für die bestrahlten Muster sowohl in der Scherfestigkeit bei Raumtemperatur als auch in der Wärmescherfestigkeit deutlich höhere Werte, was wiederum mit einer deutlichen Kohäsionserhöhung korreliert.

Die Beispiele 9 und 10 belegen, daß durch die Inkorperation von Doppelbindungen die Elektronenstrahl-Vernetzbarkeit erleichtert wird und somit Acrylatblockcopolymere effizient vernetzt werden können.

## Patentansprüche

1. Verfahren zur Herstellung eines Haftklebebandes mit einer Haftklebemasse auf Basis von Blockcopolymeren des allgemeinen Typs P(A)-P(B)-P(A), wobei jedes Blockcopolymer aus einem mittleren (Co-)Polymerblock P(B) und zwei End(co)polymerblöcken P(A) besteht, wobei
• P(A) ein (Co-)Polymer aus einer Komponente A, welche aus zumindest einem Monomer A1 besteht, repräsentiert, welches eine Glasübergangstemperatur von 0 °C oder tiefer besitzt,
• P(B) ein (Co-)Polymer aus zumindest einem Monomer B repräsentiert, welches eine Glasübergangstemperatur von 20 °C oder höher besitzt,
• der (Co-)Polymerblock P(B) in dem (Co-)Polymerblock P(A) unlöslich ist, die Blöcke P(B) und P(A) nicht mischbar sind,
**dadurch gekennzeichnet, daß**
• die Blockcopolymere durch Polymerisation über den "Reversible Addition-Fragmentation Chain Transfer" (RAFT) - Mechanismus hergestellt werden, sowie
• den Blockcopolymeren Harze beigemischt werden, welche in Polyacrylaten löslich sind.
• die Haftklebemasse auf einen Träger aufgetragen wird.

2. Verfahren nach Anspruch 1 **dadurch gekennzeichnet, daß**
als Harze Terpenharze, Terpenphenolharze, C₅- und C₉-Kohlenwasserstoffharze, Pinen-, Inden- und/oder Kolophoniumharze eingesetzt werden.

3. Verfahren nach zumindest einem der vorangehenden Ansprüche, **dadurch gekennzeichnet, daß**
die Harze zu einem Gewichtsanteil von bis zu 50 Gew.-%, bevorzugt zwischen 20 und 40 Gew.-%, bezogen auf die Blockcopolymere, vorliegen.

4. Verfarhen nach zumindest einem der vorangehenden Ansprüche, **dadurch gekennzeichnet, daß**
die Komponente A aus mindestens zwei Monomeren A1 und A2 besteht.

5. Verfahren nach zumindest einem der vorangehenden Ansprüche, **dadurch gekennzeichnet, daß**
die Komponente A2 zumindest eine funktionelle Gruppe enthält, welche sich in einer radikalischen Polymerisationsreaktion inert verhält, und welche zur Erhöhung der Kohäsion des Blockcopolymers dient; insbesondere durch Bindungen zwischen den einzelnen Blockcopolymeren, wobei die funktionelle Gruppe der Komponente A2 eines Blockcopolymer-Makromoleküls mit zumindest einem weiteren Blockcopolymer-Makromolekül in Wechselwirkung tritt; insbesondere durch eine Vernetzungsreaktion.

6. Verfahren nach zumindest einem der vorangehenden Ansprüche, **dadurch gekennzeichnet, daß**
der Block P(A) eine Glasübergangstemperatur zwischen -80 °C und 0 °C und/oder der Block P(B) eine Glasübergangstemperatur zwischen 25 °C und 180 °C besitzt.

7. Verfahren nach zumindest einem der vorangehenden Ansprüche, **dadurch gekennzeichnet, daß**
als Komponente A1 zumindest eine Verbindung der folgenden allgemeinen Formel 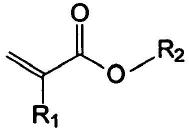 eingesetzt wird, wobei R₁ = H oder CH₃ und R₂ aus der Gruppe der verzweigten oder unverzweigten, gesättigten Alkylgruppen mit 4 - 14 Kohlenstoffatomen.

8. Verfahren nach zumindest einem der vorangehenden Ansprüche, **dadurch gekennzeichnet, daß**
als Komponente A2 zumindest eine Verbindung der folgenden allgemeinen Formel 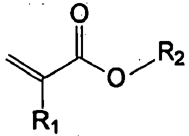 eingesetzt wird, wobei R₁ = H oder CH₃ und -OR₂ die funktionelle Gruppe zur Erhöhung der Kohäsion darstellt oder beinhaltet.

9. Verfahren nach zumindest einem der vorangehenden Ansprüche, **dadurch gekennzeichnet, daß**
die zur funktionelle Gruppe zur Erhöhung der Kohäsion eine Hydroxy-, eine Carboxy- , eine Epoxy-, eine Säureamid-, eine Isocyanato- oder eine Aminogruppe, eine einen Photoinitiator zur UV-Vernetzung beinhaltende Gruppe oder eine ungesättigte Gruppe ist.

10. Verfahren nach zumindest einem der vorangehenden Ansprüche, **dadurch gekennzeichnet, daß**
als Komponente B zumindest ein Monomer eingesetzt wird, so daß die entstehenden (Co-)Polymer-Blöcke P(B) in der Lage sind, eine 2-Phasen-Domänenstruktur mit den (Co-)Polymer-Blöcken P(A) auszubilden.

11. Verfahren nach zumindest einem der vorangehenden Ansprüche, **dadurch gekennzeichnet, daß**
die Haftklebemasse ein mittleres Molekulargewicht zwischen 25.000 und 750.000 g/mol, insbesondere zwischen 100.000 und 500.000 g/mol besitzt.

12. Verfahren nach zumindest einem der vorangehenden Ansprüche, **dadurch gekennzeichnet, daß**
der Anteil der (Co-)Polymerblöcke P(B) zwischen 10 und 60 Gew.-%, insbesondere zwischen 15 und 40 Gew.-% des gesamten Blockcopolymers liegt.

13. Verfahren nach zumindest einem der vorangehenden Ansprüche, **dadurch gekennzeichnet, daß**
der Gewichtsanteil der Komponente A2 im Verhältnis zur Komponente A1 zwischen 0,1 und 20, insbesondere zwischen 0,5 und 10 liegt.

14. Verfahren nach zumindest einem der vorangehenden Ansprüche, **dadurch gekennzeichnet, daß**
der Haftklebemasse im Laufe des Herstellungs- und/oder Verarbeitungsprozesses Additive, wie Alterungsschutzmittel, Lichtschutzmittel, Ozonschutzmittel, Fettsäuren, Weichmacher, Keimbildner, Blähmittel, Beschleuniger und/oder Füllmittel zugesetzt werden.

15. Verfahren nach zumindest einem der vorangehenden Ansprüche, **dadurch gekennzeichnet, daß**
die Haftklebemasse aus der Schmelze heraus weiterverarbeitet wird, daß sie insbesondere auf einen Träger aufgetragen wird.

## Claims

1. Process for preparing a pressure sensitive adhesive tape having a pressure sensitive adhesive based on block copolymers of the general type P (A) -P (B) -P (A), each block copolymer being composed of one middle (co)polymer block P(B) and two end (co)polymer blocks P(A), wherein
• P (A) represents a (co)polymer of a component A which is composed of at least one monomer A1, which (co)polymer possesses a glass transition temperature of 0°C or below,
• P(B) represents a (co)polymer of monomer B which (co)polymer possesses a glass transition temperature of 20°C or above,
• the (co)polymer block P(B) is insoluble in the (co)polymer block P(A), the blocks P(B) and P(A) are immiscible
**characterized in that**
• the block copolymers are prepared by polymerization via the Reversible Addition-Fragmentation Chain Transfer (RAFT) mechanism, and
• resins that are soluble in polyacrylates are admixed to the block copolymers;
• the pressure sensitive adhesive is applied to a backing.

2. Process according to Claim 1, **characterized in that** resins used are terpene resins, terpenephenolic resins, C₅ and C₉ hydrocarbon resins, pinene resins, indene resins and/or rosins.

3. Process according to at least one of the preceding claims, **characterized in that** the resins are present at a weight fraction of up to 50% by weight, preferably between 20 and 40% by weight, based on the block copolymers.

4. Process according to at least one of the preceding claims, **characterized in that** component A is composed of at least two monomers A1 and A2.

5. Process according to at least one of the preceding claims, **characterized in that** component A2 contains at least one functional group which behaves inertly in a free-radical polymerization reaction and which serves to raise the cohesion of the block copolymer; in particular, by bonds between the individual block copolymers, the functional group of component A2 of one block copolymer macromolecule entering into interaction with at least one further block copolymer macromolecule; in particular, by a crosslinking reaction.

6. Process according to at least one of the preceding claims, **characterized in that** the block P(A) possesses a glass transition temperature of between -80°C and 0°C and/or the block P(B) possesses a glass transition temperature of between 25°C and 180°C.

7. Process according to at least one of the preceding claims, **characterized in that** as component A1 use is made of at least one compound of the following general formula 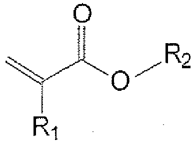 where R₁ = H or CH₃ and R₂ is from the group of the branched or unbranched, saturated alkyl groups having 4 - 14 carbon atoms.

8. Process according to at least one of the preceding claims, **characterized in that** as component A2 use is made of at least one compound of the following general formula 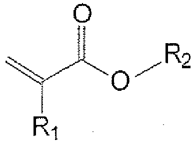 where R₁ = H or CH₃ and -OR₂ represents or contains the functional group for increasing the cohesion.

9. Process according to at least one of the preceding claims, **characterized in that** the cohesion-increasing functional group is a hydroxyl, a carboxyl, an epoxy, an acid amide, an isocyanato or an amino group, a group containing a photoinitiator for UV crosslinking, or an unsaturated group.

10. Process according to least one of the preceding claims, **characterized in that** as component B at least one monomer is used such that the resultant (co)polymer blocks P(B) are capable of forming a 2-phase domain structure with the (co)polymer blocks P (A) .

11. Process according to at least one of the preceding claims, **characterized in that** the pressure sensitive adhesive possesses an average molecular weight of between 25 000 and 750 000 g/mol, in particular between 100 000 and 500 000 g/mol.

12. Process according to at least one of the preceding claims, **characterized in that** the fraction of the (co)polymer blocks P(B) lies between 10 and 60% by weight, in particular between 15 and 40% by weight, of the entire block copolymer.

13. Process according to at least one of the preceding claims, **characterized in that** the weight fraction of the monomer A2 in relation to the monomer A1 lies between 0.1 and 20, in particular between 0.5 and 10.

14. Process according to at least one of the preceding claims, **characterized in that** additives such as aging inhibitors, light stabilizers, ozone protectants, fatty acids, plasticizers, nucleators, blowing agents, accelerators and/or fillers are added to the pressure sensitive adhesive in the course of the preparation and/or processing process.

15. Process according to at least one of the preceding claims, **characterized in that** the pressure sensitive adhesive is further processed from the melt, more particularly **in that** it is applied to a backing.

## Revendications

1. Procédé de fabrication d'une bande adhésive comprenant une masse adhésive à base de copolymères séquencés de type général P(A)-P(B)-P(A), chaque copolymère séquencé étant constitué d'une séquence (co)polymère centrale P(B) et de deux séquences (co)polymères terminales P(A),
- P(A) représentant un (co)polymère d'un composant A, qui est constitué par au moins un monomère A1, qui présente une température de transition vitreuse de 0 °C ou moins,
- P(B) représentant un (co)polymère d'au moins un monomère B, qui présente une température de transition vitreuse de 20 °C ou plus,
- la séquence (co)polymère P(B) étant insoluble dans la séquence (co)polymère P(A), les séquences P(B) et P(A) n'étant pas miscibles,
**caractérisé en ce que**
- les copolymères séquencés sont fabriqués par polymérisation par le mécanisme « Reversible Addition-Fragmentation Chain Transfer » (RAFT), et
- des résines solubles dans les polyacrylates sont incorporées dans les copolymères séquencés,
- la masse adhésive est appliquée sur un support.

2. Procédé selon la revendication 1, **caractérisé en ce que** des résines de terpène, des résines de terpène-phénol, des résines hydrocarbonées en C₅ et C₉, des résines de pinène, d'indène et/ou de colophane sont utilisées en tant que résines.

3. Procédé selon au moins l'une quelconque des revendications précédentes, **caractérisé en ce que** les résines sont présentes en une proportion en poids de jusqu'à 50 % en poids, de préférence comprise entre 20 et 40 % en poids, par rapport aux copolymères séquencés.

4. Procédé selon au moins l'une quelconque des revendications précédentes, **caractérisé en ce que** le composant A est constitué par au moins deux monomères A1 et A2.

5. Procédé selon au moins l'une quelconque des revendications précédentes, **caractérisé en ce que** le composant A2 contient au moins un groupe fonctionnel qui se comporte de manière inerte lors d'une réaction de polymérisation radicalaire et qui sert à augmenter la cohésion du copolymère séquencé ; notamment par des liaisons entre les copolymères séquencés individuels, le groupe fonctionnel du composant A2 d'une macromolécule de copolymère séquencé interagissant avec au moins une autre macromolécule de copolymère séquencé, notamment par une réaction de réticulation.

6. Procédé selon au moins l'une quelconque des revendications précédentes, **caractérisé en ce que** la séquence P(A) présente une température de transition vitreuse comprise entre -80 °C et 0 °C et/ou la séquence P(B) présente une température de transition vitreuse comprise entre 25 °C et 180 °C.

7. Procédé selon au moins l'une quelconque des revendications précédentes, **caractérisé en ce qu'**au moins un composé de la formule générale suivante 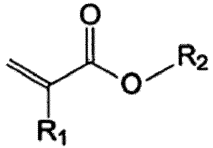 est utilisé en tant que composant A1, avec R₁ = H ou CH₃ et R₂ étant choisi dans le groupe constitué par les groupes alkyle saturés ramifiés ou non ramifiés de 4 à 14 atomes de carbone.

8. Procédé selon au moins l'une quelconque des revendications précédentes, **caractérisé en ce qu'**au moins un composé de la formule générale suivante 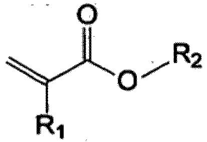 est utilisé en tant que composant A2, avec R₁ = H ou CH₃ et -OR₂ représentant ou contenant le groupe fonctionnel pour l'augmentation de la cohésion.

9. Procédé selon au moins l'une quelconque des revendications précédentes, **caractérisé en ce que** le groupe fonctionnel pour l'augmentation de la cohésion est un groupe hydroxy, carboxy, époxy, amide d'acide, isocyanato ou amino, un groupe contenant un photoinitiateur pour la réticulation UV ou un groupe insaturé.

10. Procédé selon au moins l'une quelconque des revendications précédentes, **caractérisé en ce qu'**au moins un monomère tel que les séquences (co)polymères P(B) formées soient en mesure de former une structure de domaine biphasé avec les séquences (co)polymères P(A) est utilisé en tant que composant B.

11. Procédé selon au moins l'une quelconque des revendications précédentes, **caractérisé en ce que** la masse adhésive présente un poids moléculaire moyen compris entre 25 000 et 750 000 g/mol, notamment entre 100 000 et 500 000 g/mol.

12. Procédé selon au moins l'une quelconque des revendications précédentes, **caractérisé en ce que** la proportion des séquences (co)polymères P(B) est comprise entre 10 et 60 % en poids, notamment entre 15 et 40 % en poids du copolymère séquencé total.

13. Procédé selon au moins l'une quelconque des revendications précédentes, **caractérisé en ce que** la proportion en poids du composant A2 par rapport au composant A1 est comprise entre 0,1 et 20, notamment entre 0,5 et 10.

14. Procédé selon au moins l'une quelconque des revendications précédentes, **caractérisé en ce que** des additifs, tels que des agents antivieillissement, des agents photoprotecteurs, des agents anti-ozone, des acides gras, des plastifiants, des agents de nucléation, des agents gonflants, des accélérateurs et/ou des charges, sont ajoutés à la masse adhésive au cours du procédé de fabrication et/ou d'usinage.

15. Procédé selon au moins l'une quelconque des revendications précédentes, **caractérisé en ce que** la masse adhésive est transformée à partir de la masse fondue, notamment par application sur un support.
